# DEMANDE DE BREVET EUROPEEN

(11) **EP 2 257 019 A1**
(43) Date de publication de la demande: **01.12.2010**
(21) Numéro de dépôt: 10163326.1
(22) Date de dépôt: 19.05.2010
(51) Int. Cl.: H04L 29/06, H04L 29/08

(54) **Procédé de traitement de document par un ordinateur distant, système et dispositif amovible connectable à chaud pour la mise en oeuvre de ce procédé**

(30) Priorité: 28.05.2009 FR 0902577
(71) Demandeur: Sagem Communications SAS, 92500 Rueil-Malmaison (FR)
(72) Inventeur: Ferreri, Jean-Thomas, 92500, RUEIL-MALMAISON (FR)
(74) Mandataire: Lavialle, Bruno François Stéphane

(57) **Abrégé**

Procédé de traitement, sur un serveur (1) pourvu d'un organe de liaison sans fil (2), d'au moins un fichier en au moins un premier format contenu dans un ordinateur (100), le procédé comprenant les étapes de :
- relier à l'ordinateur un dispositif amovible connectable à chaud (50) comportant un organe de transmission sans fil de données (73) et une mémoire (71) contenant un répertoire de stockage (75) de fichiers en un deuxième format et un programme de commande agencé pour émettre, via l'organe de transmission, les fichiers du deuxième format contenus dans le répertoire,
- renommer le fichier de premier format en utilisant une extension correspondant au deuxième format,
- copier le fichier de premier format renommé dans le répertoire, puis transférer le fichier de premier format renommé,
- à réception par le serveur du fichier de premier format renommé, traiter le fichier de premier format.

Système et dispositif amovible connectable à chaud à un ordinateur, agencés pour la mise en oeuvre de ce procédé.

## Description

La présente invention concerne un procédé de traitement, sur un serveur ou toute autre unité informatique, de fichiers d'un premier format contenu dans un ordinateur. L'invention a également pour objet un système et un dispositif amovible connectable à chaud à l'ordinateur, le système et le dispositif étant agencés pour la mise en oeuvre de ce procédé.

Dans certaines situations, un utilisateur d'ordinateur portable peut avoir besoin de réaliser une impression d'un document ou de transmettre un document sur Internet alors qu'il n'est pas relié, que ce soit directement ou via un réseau, à un dispositif d'impression, à un télécopieur ou à une passerelle d'accès à Internet.

Tel est le cas par exemple dans le hall d'attente d'une entreprise d'un client ou d'un fournisseur de ladite entreprise. Il pourrait être intéressant pour ladite entreprise de fournir un accès à un dispositif d'impression ou de télécopie et à une passerelle d'accès au réseau Internet. Ceci suppose toutefois d'établir une liaison entre l'ordinateur et le dispositif d'impression et/ou la passerelle d'accès à Internet. L'établissement d'une telle liaison demande cependant quelques connaissances informatiques pour correctement paramétrer la liaison et l'installation d'au moins un pilote logiciel. Il serait également possible, tous les ordinateurs portables étant aujourd'hui équipés de moyens de connexion WIFI, de permettre à l'ordinateur du client ou du fournisseur de se connecter, via une liaison de type WIFI, à un réseau de l'entreprise permettant d'accéder à un dispositif d'impression et de télécopie et à une passerelle d'accès à Internet. Ceci revient cependant à entrouvrir une porte d'accès aux données de l'entreprise et à l'inverse une porte d'accès aux données de l'utilisateur.

Ce problème peut se rencontrer dans tout lieu de passage comme un hôtel, les salons d'attente d'un aéroport ou d'une gare...

Un but de l'invention est de permettre la transmission de fichiers depuis un ordinateur émetteur vers un ordinateur distant sans modifier la configuration de l'ordinateur émetteur et en respectant la confidentialité des données tant de l'ordinateur émetteur que de l'ordinateur distant ou des autres équipements reliés à ce dernier directement ou via un réseau.

A cet effet, on prévoit, selon l'invention, un procédé de traitement, sur un serveur pourvu d'un organe de liaison sans fil, d'au moins un fichier en au moins un premier format contenu dans un ordinateur, le procédé comprenant les étapes de :
- relier à l'ordinateur un dispositif amovible connectable à chaud comportant un organe de transmission sans fil de données et une mémoire contenant un répertoire de stockage de fichiers en un deuxième format et un programme de commande agencé pour émettre, via l'organe de transmission, les fichiers du deuxième format contenus dans le répertoire,
- renommer le fichier de premier format en utilisant une extension correspondant au deuxième format,
- copier le fichier de premier format renommé dans le répertoire, puis transférer le fichier de premier format renommé,
- à réception par le serveur du fichier de premier format renommé, traiter le fichier de premier format.

Ainsi, c'est le dispositif amovible, qui n'apparaît pour l'ordinateur que comme un dispositif de stockage, qui est paramétré pour émettre le fichier de premier format de façon autonome. Aucune opération de configuration et paramétrage de l'ordinateur n'est nécessaire. La confidentialité des données de l'ordinateur et du serveur est assurée par l'absence de liaison réseau entre eux.

L'invention a également pour objets un système et un dispositif amovible pour la mise en oeuvre de ce procédé.

D'autres caractéristiques et avantages de l'invention ressortiront à la lecture de la description qui suit de modes de réalisation particuliers non limitatifs de l'invention.

Il sera fait référence aux dessins annexés, parmi lesquels :

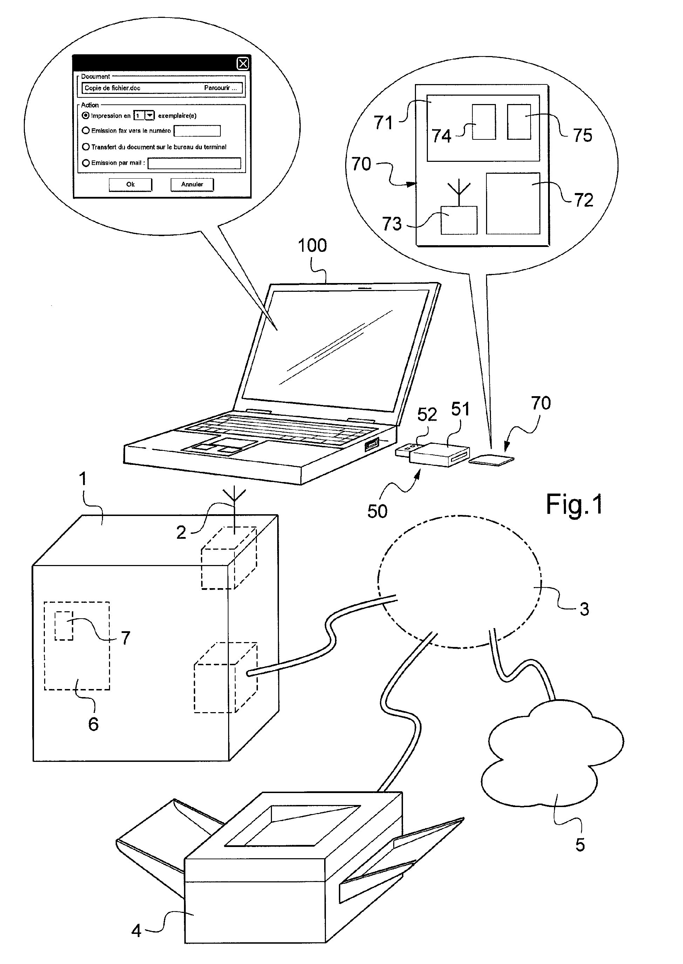

- la figure 1 illustre le fonctionnement du système conforme à l'invention,
- la figure 2 représente schématiquement l'arborescence de la mémoire du dispositif amovible,
- la figure 3 est un schéma illustrant le fonctionnement du programme de commande de l'invention.

En référence aux figures, le procédé et le système de l'invention permettent le transfert de fichiers depuis un ordinateur 100 classique, ici de type portable, comportant un port USB. Cet ordinateur 100 fonctionne sous un système d'exploitation assurant l'interface entre les ressources matérielles de l'ordinateur et les applications informatiques exécutées sur l'ordinateur, et gérant également les entrées / sorties tant physiques que logicielles. Des pilotes sont pré-chargés dans le système d'exploitation pour permettre à celui-ci de reconnaître des périphériques qui seraient raccordés directement ou via un réseau aux ports de connexion externe de l'ordinateur. La structure tant matérielle que logicielle de l'ordinateur 100 est tout-à-fait classique.

Le procédé de l'invention permet d'imprimer les fichiers en question, de les transmettre par télécopie ou par courriel, ou simplement de les copier vers un ordinateur distant sans que l'ordinateur 100 ne soit raccordé à une imprimante, un télécopieur ou à l'ordinateur distant.

Le procédé est mis en oeuvre au moyen d'un serveur 1 (ou tout autre type d'unité informatique) et d'un dispositif amovible 50 connectable à chaud à l'ordinateur 100, le serveur comportant une unité de commande, une mémoire 6 et un organe de liaison sans fil 2, le dispositif amovible connectable à chaud comportant un organe de transmission sans fil 73 de données et une mémoire 71 contenant un répertoire de stockage 75 de fichiers en un deuxième format, la mémoire du serveur et la mémoire du dispositif amovible contenant chacune un programme de commande agencé mettre en oeuvre le procédé.

Plus précisément, le serveur 1 est classique dans sa structure et comporte des moyens de liaison WIFI 2 émetteur-récepteur (conformes à la norme IEEE 802.11 ou ISO/CEI 8802-11 de type g), une liaison à un réseau 3 d'entreprise de type Intranet auquel est relié un terminal multifonction 4 (permettant d'imprimer et de télécopier) et une passerelle d'accès à un réseau de type Internet 5. Le serveur possède une mémoire 6 contenant un programme de surveillance des données transmises par WIFI et un programme de traitement des fichiers contenus dans un répertoire dédié 7.

Le dispositif amovible 50 comprend un lecteur 51 de carte mémoire, par exemple de type SD (pour « Secure Digital »), qui est relié à un port 52 de type USB et qui est agencé pour recevoir une carte mémoire 70. D'autres formats de carte mémoire sont bien entendu utilisables.

La carte mémoire 70 comporte une mémoire 71, un processeur 72 et un émetteur WIFI 73.

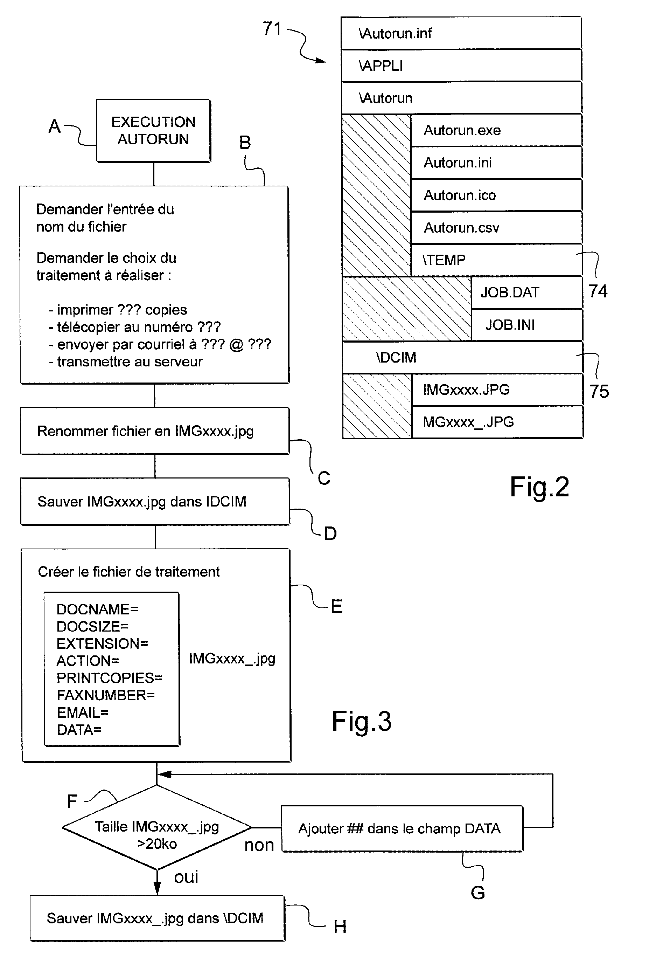

La mémoire 71 comporte un répertoire tampon 74 (\TEMP sur la figure 2) destiné à recevoir des fichiers de différents formats et un répertoire DCIM 75 (\DCIM, « Digital Camera Images » pour images d'appareil photographique numérique) pour recevoir des fichiers images et lus particulièrement des fichiers JPEG. Le répertoire DCIM 75 est un répertoire normalisé dans lequel les fichiers sont nommés IMGnnnn.jpg où « nnnn » est le numéro de fichier.

En référence plus particulièrement à la figure 2, l'arborescence de la mémoire 71 comprend à titre d'exemple dans sa racine \ :
- \Autorun.inf,: information de lancement automatique pour le système d'exploitation ;
- \APPLI,: répertoire contenant les fichiers propriétaires de la configuration de la carte mémoire ;
- \Autorun,: répertoire contenant le programme embarqué et les fichiers associés ;

- Autorun.exe, l'exécutable du programme de commande,
- Autorun.ini, le fichier de configuration du programme de commande,
- Autorun.ico, l'icône du programme de commande,
- Autorun.csv, les traces de fonctionnement du programme de commande
- \TEMP, répertoire des fichiers temporaires du programme de commande, contenant par exemple
   - JOB.DAT, le document sélectionné qui a été copié et renommé,
   - JOB.INI, le fichier d'initialisation qui
      contient les informations de traitement.
      \DCIM, répertoire contenant
- IMGxxxx.JPG, fichier document renommé,
- IMGxxxx_.JPG, fichier des informations de traitement du document renommé.

Le dispositif amovible 50 est conçu pour fonctionner à partir des pilotes préinstallés dans le système d'exploitation du serveur 1 et de tout ordinateur en général. Le dispositif amovible 50 est ici reconnu comme un périphérique de stockage de masse ou périphérique de masse.

La mémoire 71 de la carte mémoire 70 comprend en outre dans sa racine un programme de commande et un répertoire de transfert.

Le programme de commande est compilé de façon statique pour fonctionner comme un programme résidant en mémoire vive de manière autonome sans utiliser les logiciels présents sur le disque dur de l'ordinateur 100 lorsque le dispositif amovible 50 est connecté au dit ordinateur 100. Le programme de commande ne copie aucun fichier sur le disque dur de l'ordinateur et se ferme automatiquement au retrait du dispositif amovible. Le programme de commande n'a donc besoin pour fonctionner d'aucun droit particulier sur le système d'exploitation.

Le programme de transfert assure, automatiquement et de façon totalement autonome, la transmission via l'émetteur WIFI 73 de tout nouveau fichier enregistré dans le répertoire DCIM 75.

A la connexion du dispositif amovible 50, le système d'exploitation de l'ordinateur 100 reconnaît le dispositif amovible 50 comme un périphérique de stockage de masse, lit le contenu de la mémoire 71 du dispositif amovible 50 et propose à l'utilisateur d'exécuter le programme de commande qu'elle contient.

Le programme de commande lancé (étape A) affiche sur un écran une fenêtre de paramétrage 80 à partir de laquelle l'utilisateur spécifie ce qu'il veut faire de son fichier. La fenêtre de paramétrage 80 se présente sous la forme d'un menu permettant de sélectionner le fichier à traiter et de choisir le traitement à effectuer (étape B) à savoir :
- télécopier le document (un champ à remplir dans la fenêtre permet de spécifier le numéro du destinataire),
- transférer simplement le fichier sur le serveur 1,
- émettre le fichier dans un courriel (un champ à remplir dans la fenêtre permet de spécifier l'adresse de messagerie électronique du destinataire).

L'utilisateur doit ensuite valider ses choix par appui sur un bouton de la fenêtre.

Le programme de commande copie le fichier en question dans le répertoire de la carte mémoire puis le renomme IMGxxxx.jpg (étape C) et le copie dans le répertoire DCIM 75 (étape D).

Le programme de commande crée le fichier de traitement correspondant (étape E).

Le fichier de traitement contient :
- le nom initial du fichier,
- le format initial du fichier,
- la taille initiale du fichier,
- l'action ou traitement à réaliser (ici sous forme d'un code) et, le cas échéant, le nombre de copies pour l'impression, l'adresse de courriel ou le numéro de télécopie.

Sur la figure 3, le fichier de traitement possède une syntaxe similaire à la syntaxe d'un fichier d'initialisation classique et comporte les champs suivants :
► DOCNAME correspond au nom d'origine du document.
► DOCSIZE correspond à la taille en octets du document.
► EXTENSION correspond au type du document ; par exemple
   ■ « doc » pour un fichier MICROSOFT WORD,
   ■ (pdf) pour un fichier ADOBE ACROBAT,
   ■ ...
► ACTION correspond au traitement qui doit être exécuté sur le document
   ■ 1 pour une impression
   ■ 2 pour une émission fax
   ■ 3 pour une émission mail ■ 4 pour une transmission simple au serveur
► PRINTCOPIES, FAXNUMBER, EMAIL... correspondent aux paramètres de traitement
   ■ PRINTCOPIES pour le nombre d'exemplaires lors d'une impression
   ■ FAXNUMBER pour le numéro de fax lors d'une émission de télécopie,
   ■ EMAIL pour l'adresse lors d'une émission de courriel,
   ■ ...
► DATA ne correspond à aucune information comme cela sera expliqué ci-après.

Le fichier de traitement a pour nom IMGxxxx_.jpg. Le fichier de traitement a ainsi un nom très proche du fichier auquel il se rapporte, ce qui permettra au serveur 1 de facilement associer le fichier de traitement qui lui est associé. Le fichier de traitement est ensuite copié dans le répertoire DCIM 75 de la mémoire 71 de la carte mémoire 70.

Le programme de transfert assure automatiquement la transmission des fichiers figurant dans le répertoire DCIM 75 via l'émetteur WIFI intégré dans la carte mémoire 70 (étape H).

La taille des fichiers envoyés est comprise entre 20 Ko (kilo-octets) et 20 Mo (méga-octets). En-dessous de 20 Ko, le programme de commande n'envoie pas le fichier et au-dessus de 20 Mo, la durée de la transmission serait trop longue compte-tenu du débit permis par la liaison WIFI. L'utilisateur est averti dans ces deux cas que le traitement du fichier ne sera pas possible. La taille du fichier de traitement est donc vérifiée (étape F) avant que celui-ci ne soit sauvé dans le répertoire DCIM 75. Le fichier de traitement est rempli de caractères de bourrage (ici « # ») si nécessaire (étape G) jusqu'à ce que le fichier de traitement ait une taille supérieure à 20Ko. Lorsqu'il est utilisé comme programme de transfert, un programme normalement dédié à la transmission automatique de photographies, le programme de transfert ne transmet que les photos de taille supérieure à 20Ko afin d'éviter de transférer les miniatures généralement associées aux photographies par la plupart des appareils numériques. Donc, pour s'assurer que le fichier contenant les informations de traitement du document soit transféré, on complète le champ DATA pour que la taille du fichier soit supérieure à 20Ko.

Le programme de surveillance du serveur 1 est paramétré pour copier les fichiers reçus du dispositif amovible 50 dans le répertoire dédié. Le programme de traitement du serveur 1 compare ensuite la taille du fichier renommé à celle indiqué dans le fichier de traitement pour vérifier que le fichier renommé est complet. Si tel est le cas, le serveur rend au fichier renommé son nom initial et effectue l'action spécifiée dans le fichier de traitement.

Bien entendu, l'invention n'est pas limitée aux modes de réalisations décrits mais englobe toute variante entrant dans le champ de l'invention telle que définie par les revendications.

En particulier, l'invention est applicable à d'autres formats de fichiers.

Le dispositif amovible peut avoir une structure différente de celle décrite et comprendre par exemple un disque dur amovible équipé d'un émetteur WIFI ou similaire.

La liaison sans fil peut être une liaison hertzienne ou optique.

Le programme de surveillance et le programme de commande du serveur peuvent être regroupés dans un programme unique

Le programme de transfert et le programme de commande de la carte mémoire peuvent être regroupés dans un programme unique.

## Revendications

1. Procédé de traitement, sur un serveur (1) pourvu d'un organe de liaison sans fil (2), d'au moins un fichier en au moins un premier format contenu dans un ordinateur (100), le procédé comprenant les étapes de :
- relier à l'ordinateur un dispositif amovible connectable à chaud (50) comportant un organe de transmission sans fil de données (73) et une mémoire (71) contenant un répertoire de stockage (75) de fichiers en un deuxième format et un programme de commande agencé pour émettre, via l'organe de transmission, les fichiers du deuxième format contenus dans le répertoire,
- renommer le fichier de premier format en utilisant une extension correspondant au deuxième format,
- copier le fichier de premier format renommé dans le répertoire, puis transférer le fichier de premier format renommé,
- à réception par le serveur du fichier de premier format renommé, traiter le fichier de premier format.

2. Procédé selon la revendication 1, dans lequel le programme de commande est agencé pour créer un fichier de traitement contenant au moins une donnée en relation avec le fichier de premier format, le fichier de traitement ayant un nom incorporant l'extension correspondant au deuxième format, le procédé comprenant l'étape de copier le fichier de traitement dans le répertoire (75) avec le fichier de premier format renommé.

3. Procédé selon la revendication 2, dans lequel la donnée en relation avec le fichier de premier format est le format du fichier de premier format.

4. Procédé selon la revendication 2, dans lequel la donnée en relation avec le fichier de premier format est la taille du fichier de premier format, le traitement dans le serveur comprenant l'étape de comparer la taille du fichier de premier format renommé reçu à la taille contenue dans le fichier de traitement.

5. Procédé selon la revendication 2, dans lequel la donnée en relation avec le fichier de premier format est le traitement à réaliser par le serveur (1) sur le fichier de premier format.

6. Procédé selon la revendication 2, dans lequel la création du fichier de traitement comprend l'étape d'introduire des données de bourrage jusqu'à ce que le fichier de traitement ait une taille supérieure à une taille minimale prédéfinie.

7. Procédé selon la revendication 1, dans lequel, le serveur (1) étant relié à un dispositif d'impression (4), le traitement comprend l'étape de commander l'impression du fichier de premier format.

8. Procédé selon la revendication 7, dans lequel le traitement comprend l'étape préalable d'identifier le format du fichier de premier format avant de transmettre le fichier de premier format au dispositif d'impression (4).

9. Procédé selon la revendication 1, dans lequel, le serveur (1) étant relié à :
- un réseau de type Internet (5), le traitement comprend l'étape d'envoyer le fichier de premier format sur le réseau comme message ou en incorporation dans un message, ou
- un réseau de type téléphonique, le traitement comprend l'étape d'envoyer le fichier de premier format comme télécopie.

10. Procédé selon la revendication 1, dans lequel le deuxième format est un format image de type JPEG.

11. Système de traitement d'un fichier en un premier format contenu dans un ordinateur (100), comportant un serveur (1) et au moins un dispositif amovible connectable à chaud (50) à l'ordinateur, le serveur comportant une unité de commande, une mémoire (6) et un organe de liaison sans fil (2), le dispositif amovible connectable à chaud comportant un organe de transmission sans fil (73) de données et une mémoire (71) contenant un répertoire de stockage (75) de fichiers en un deuxième format, la mémoire du serveur et la mémoire du dispositif amovible contenant chacune un programme de commande agencé mettre en oeuvre le procédé des revendications 1 à 10.

12. Dispositif amovible (50) comportant des moyens de sa connexion à chaud (52) à un ordinateur (100), un organe de transmission sans fil (77) de données et une mémoire (71) contenant :
- un premier répertoire (74) pour stocker au moins un fichier d'au moins un premier format,
- un deuxième répertoire (75) pour stocker des fichiers d'un deuxième format,
- un programme de commande agencé pour mettre en oeuvre le procédé selon les revendications 1 à 10.

13. Dispositif selon la revendication 12, le programme de commande est agencé pour émettre, via l'organe de transmission (71), les fichiers de deuxième format contenus dans le deuxième répertoire (75), pour renommer le fichier de premier format avec une extension correspondant au deuxième format et pour copier dans le deuxième répertoire le fichier de premier format renommé.

14. Dispositif selon la revendication 13, dans lequel le programme de commande est agencé pour créer un fichier de traitement contenant au moins une donnée en relation avec le fichier de premier format, le fichier de traitement ayant un nom incorporant l'extension correspondant au deuxième format, et copier le fichier de premier format renommé et le fichier de traitement dans le deuxième répertoire (75).

15. Dispositif selon la revendication 12, dans lequel les moyens de connexion (52) incorpore un bus série universel ou USB.

16. Dispositif selon la revendication 12, comportant une carte mémoire (70) intégrant l'organe de transmission sans fil (73), et un lecteur de carte (51) qui est pourvu des moyens de connexion et qui reçoit la carte mémoire.
